# EUROPEAN PATENT SPECIFICATION

(11) **EP 1 376 899 B1**
(45) Date of publication and mention of the grant of the patent: **02.12.2009**
(21) Application number: 03013617.0
(22) Date of filing: 16.06.2003
(51) Int. Cl.: H04B 10/08

(54) **System and method for quantification of optical signal-to-noise ratio using low frequency electrical signal analysis**
System und Methode zur Messung des optischen Signal-Rauschverhältnises in einem optischen Übertragungssystem
Système et méthode de mesure du rapport signal sur bruit optique dans un système de communication optique

(30) Priority: 19.06.2002 US 175191
(43) Date of publication of application: 02.01.2004
(73) Proprietor: Alcatel Lucent, 75008 Paris (FR)
(72) Inventor: Butler, David J., Richardson, TX 75080 (US); Burford, Robert, McKinney, TX 75071 (US)
(74) Representative: Schmidt, Werner Karl

(56) References cited:
- US-A1- 2002 171 889
- US-B1- 6 310 703
- US-B1- 6 400 479

## Description

### TECHNICAL FIELD OF THE INVENTION

The present invention relates to optical communication networks, and more particularly to a system for quantification of an optical signal-to-noise ratio.

### BACKGROUND OF THE INVENTION

Signal quality is generally specified in terms of a signal-to-noise ratio. The optical signal-to-noise ratio (OSNR) is a key parameter for determining the relative "health" of an optical data signal. For most optical data channels, the noise power is very small in comparison to the signal power. This fact complicates the accurate qualification of the noise power.

US-B1-6 310 703 describes a system that measures energy levels before and after an optical filter. The OSNR is then calculated from the ratio of carrier strength to background optical noise.

Spectrometry is utilized for generating a quantification of noise power. Spectral metric equipment produces a set of data that relates an optical power measurement to a corresponding value in the wavelength spectrum. The OSNR is computed from these data sets. Spectral metric equipment produces results for a wide wavelength band and tends to be expensive. Therefore, a need has arisen for an inexpensive method for determining the OSNR for a single optical data channel.

### SUMMARY OF THE INVENTION

The invention solves these objects by a system according to claim 1 and by a method according to claim 3.

In accordance with the present invention, a system for quantification of an OSNR of an optical signal transmitted in an optical communications network is provided. The system includes a signal converter for converting a sample of the optical signal to an electrical signal. The electrical signal is filtered within a predetermined range of frequencies to generate a filtered signal. An energy detector detects the energy level of the filtered signal. An energy detector detects the energy level of the electrical signal. A comparator compares the energy levels of the electrical signal to the energy level of the filtered signal to generate an output representative of the OSNR.

### BRIEF DESCRIPTION OF THE DRAWINGS

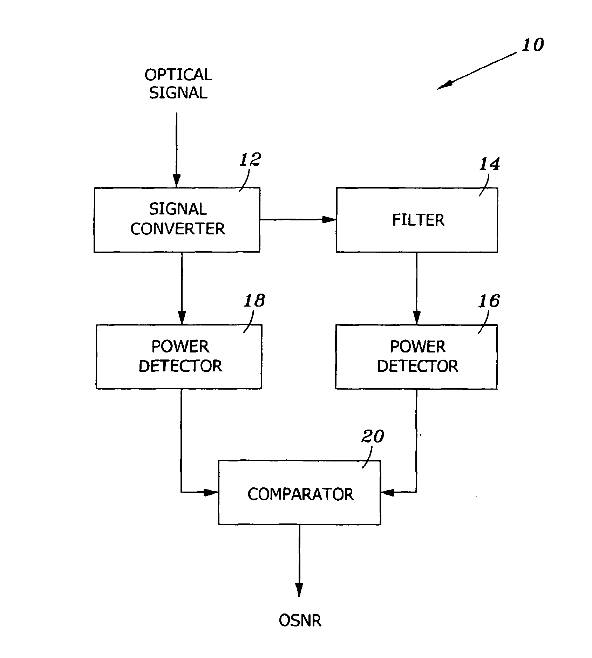

For a more complete understanding of the present invention and for further advantages thereof, reference is now made to the following Description of the Preferred Embodiments taken in conjunction with the accompanying drawing which is a block diagram of the present system.

### DESCRIPTION OF THE PREFERRED EMBODIMENTS

Referring to the Figure, a block diagram of the present system for quantification of an OSNR of an optical signal transmitted in an optical communications network is illustrated, and is generally identified by the numeral 10. An optical input signal is applied to a signal converter 12 for converting a sample of the optical signal to an electrical signal. Signal converter 12 may comprise, for example, a photodiode. The output of signal converter 12 is applied to a filter 14. Filter 14 may comprise, for example, a band pass electrical filter having a narrow pass band. The output of filter 14 is applied to a power detector 16 which measures the power level of the filtered signal generated by filter 14.
The output of signal converter 12 is also applied to a power detector 18 for measuring the power level of the total optical signal. The power levels detected by detectors 16 and 18 are compared in a comparator 20 to produce a measurement of the OSNR. By measuring the power of the total optical signal and comparing that to the power measured through the narrow filter, centered within a low frequency band by filter 14, a measurement of the OSNR is produced.
The present system generates an OSNR for a single optical channel.
Whereas the present invention has been described with respect to specific embodiments thereof, it will be understood that various changes and modifications will be suggested to one skilled in the art and it is intended to encompass such changes and modifications as fall within the scope of the appended claims.

## Claims

1. A system (10) for quantifying the optical signal-to-noise ratio (OSNR) of an optical signal transmitted in an optical communications network, the system (10) being **characterized by**:
a signal converter (12) for converting a sample of the optical signal to an electrical signal;
a filter (14) for receiving said electrical signal and for filtering said electrical signal within a predetermined range of frequencies to generate a filtered signal;
an energy detector (18) for detecting an energy level of said electrical signal;
an energy detector (16) for detecting an energy level of said filtered signal; and
a comparator (20) for comparing said energy level of said electrical signal to said energy level of said filtered signal to thereby generate a representation of the OSNR.

2. The system of claim 1 wherein said filter (14) includes a band pass electrical filter having a narrow pass band.

3. A method for quantifying the optical signal-to-noise ratio (OSNR) of an optical signal transmitted in an optical communications network, the method being **characterized by**:
converting a sample of the optical signal to an electrical signal;
filtering the electrical signal within a predetermined range of frequencies to generate a filtered signal;
detecting an energy level of the electrical signal;
detecting an energy level of the filtered signal; and
comparing the energy level of the electrical signal to the energy level of the filtered signal to thereby generate a representation of the OSNR.

4. The method of claim 3 wherein filtering the electrical signal includes filtering the electrical signal through a band pass electrical filter having a narrow pass band.

## Patentansprüche

1. Ein System (10) zur Messung des optischen Signal-Rauschverhältnisses (OSNR) eines in einem optischen Kommunikationssystem übertragenenen optischen Signals, wobei das System (10) **gekennzeichnet ist durch**:
Einen Signalwandler (12) zum Umwandeln eines Musters des optischen Signals in ein elektrisches Signal;
einen Filter (14) zum Empfangen des elektrischen Signals und zum Filtern des besagten elektrischen Signals innerhalb eines vorherbestimmten Frequenzbereichs, um ein gefiltertes Signal zu erzeugen;
einen Energiedetektor (18) zum Erfassen eines Energiepegels des besagten elektrischen Signals;
einen Energiedetektor (16) zum Erfassen eines Energiepegels des besagten gefilterten Signals; und
einen Komparator (20) zum Vergleichen des besagten Energiepegels des besagten elektrischen Signals mit dem besagten Energiepegel des besagten gefilterten Signals, um dadurch eine Darstellung des OSNR zu erzeugen.

2. Das System nach Anspruch 1, wobei der besagte Filter (14) einen elektrischen Bandpassfilter mit einem schmalen Durchlassbereich umfasst.

3. Ein Verfahren zum Messen des optischen Signal-Rauschverhältnisses (OSNR) eines in einem optischen Kommunikationssystem übertragenen optischen Signals, wobei das Verfahren **gekennzeichnet ist durch**:
Das Umwandeln eines Musters des optischen Signals in ein elektrisches Signal;
das Filtern des elektrischen Signals innerhalb eines vorherbestimmten Frequenzbereichs, um ein gefiltertes Signal zu erzeugen;
das Erfassen eines Energiepegels des elektrischen Signals;
das Erfassen eines Energiepegels des gefilterten Signals; und
das Vergleichen des Energiepegels des elektrischen Signals mit dem Energiepegel des gefilterten Signals, um **dadurch** eine Darstellung des OSNR zu erzeugen.

4. Das Verfahren nach Anspruch 3, wobei das Filtern des elektrischen Signals das Filtern des elektrischen Signals anhand eines elektrischen Bandpassfilters mit einem schmalen Durchlassbereich umfasst.

## Revendications

1. Système (10) de mesure du rapport signal sur bruit optique (OSNR) d'un signal optique émis dans un réseau de communication optique, le système (10) étant **caractérisé par** :
un convertisseur de signaux (12) pour convertir un échantillon du signal optique en un signal électrique ;
un filtre (14) pour recevoir ledit signal électrique et pour filtrer ledit signal électrique à l'intérieur d'une plage prédéterminée de fréquences pour générer un signal filtré ;
un détecteur d'énergie (18) pour détecter un niveau d'énergie dudit signal électrique ;
un détecteur d'énergie (16) pour détecter un niveau d'énergie dudit signal filtré ; et
un comparateur (20) pour comparer ledit niveau d'énergie dudit signal électrique audit niveau d'énergie dudit signal filtré afin de générer une représentation de l'OSNR.

2. Système selon la revendication 1 dans lequel ledit filtre (14) comprend un filtre électrique passe-bande présentant une bande passante étroite.

3. Procédé de mesure du rapport signal sur bruit optique (OSNR) d'un signal optique émis dans un réseau de communication optique, le procédé étant **caractérisé en ce qu'**il :
convertit un échantillon du signal optique en un signal électrique ;
filtre le signal électrique à l'intérieur d'une plage prédéterminée de fréquences pour générer un signal filtré ;
détecte un niveau d'énergie du signal électrique ;
détecte un niveau d'énergie du signal filtré ; et
compare le niveau d'énergie du signal électrique au niveau d'énergie du signal filtré afin de générer une représentation de l'OSNR.

4. Procédé selon la revendication 3 dans lequel le filtrage du signal électrique comprend le filtrage du signal électrique par l'intermédiaire d'un filtre électrique passe-bande présentant une bande passante étroite.
